(19) Europäisches Patentamt / European Patent Office / Office européen des brevets

(11) **EP 2 650 049 B1**

(12) **EUROPEAN PATENT SPECIFICATION**

(45) Date of publication and mention
of the grant of the patent:
**12.09.2018 Bulletin 2018/37**

(21) Application number: **11847713.2**

(22) Date of filing: **09.12.2011**

(51) Int Cl.:
*B01J 31/12* [(2006.01)]    *B01J 21/12* [(2006.01)]
*B01J 29/076* [(2006.01)]    *C01B 3/40* [(2006.01)]
*B01J 31/22* [(2006.01)]    *B01J 31/02* [(2006.01)]

(86) International application number:
**PCT/KR2011/009495**

(87) International publication number:
**WO 2012/078002 (14.06.2012 Gazette 2012/24)**

(54) **HYDROPROCESSING CATALYST AND METHOD FOR PREPARING SAME**

WASSERSTOFFBEHANDLUNGSKATALYSATOR UND VERFAHREN ZU SEINER HERSTELLUNG

CATALYSEUR D'HYDROTRAITEMENT ET SON PROCÉDÉ DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2010 KR 20100125461
08.12.2011 KR 20110131237**

(43) Date of publication of application:
**16.10.2013 Bulletin 2013/42**

(73) Proprietor: **SK Innovation Co., Ltd.
Seoul 110-110 (KR)**

(72) Inventors:
• **LEE, Sang Il
Daejeon 305-509 (KR)**
• **KIM, Do Woan
Daejeon 305-741 (KR)**
• **KOH, Jae Hyun
Daejeon 305-745 (KR)**
• **OH, Seung Hoon
Seoul 135-270 (KR)**
• **JEON, Hee Jung
Daejeon 305-370 (KR)**
• **MOON, Sang Heup
Seoul 137-752 (KR)**

• **CHO, A Ra
Seongnam-si
Gyeonggi-do 462-080 (KR)**
• **PARK, Young Moo
Daejeon 305-772 (KR)**

(74) Representative: **Herzog, Fiesser & Partner
Patentanwälte PartG mbB
Isartorplatz 1
80331 München (DE)**

(56) References cited:
WO-A2-2008/045551    CN-C- 100 435 954
JP-A- 2001 276 626    JP-A- 2007 152 324
JP-A- 2008 105 031    KR-A- 20030 027 039
KR-A- 20050 090 007    KR-A- 20080 081 036
US-A- 3 681 315    US-A1- 2008 146 438
US-A1- 2008 194 892

• KALUZA L ET AL: "Hydrotreating catalysts
supported on organized mesoporous alumina:
Optimization of Mo deposition and promotional
effects of Co and Ni", APPLIED CATALYSIS A:
GENERAL, ELSEVIER SCIENCE, AMSTERDAM,
NL, vol. 351, no. 1, 15 December 2008
(2008-12-15), pages 93-101, XP025609038, ISSN:
0926-860X, DOI: 10.1016/J.APCATA.2008.09.002
[retrieved on 2008-09-10]

## Description

### Technical Field

The present invention relates to a hydroprocessing catalyst used in hydrorefining, hydrotreating and hydrocracking processes, and a method of preparing the same.

### Background Art

In conventional hydrorefining, particularly, desulfurization and denitrogenation reactions of hydrocarbon oil derived from petroleum fractions or coal, a catalyst including a carrier supported with at least one selected from among VIB group metal elements in the periodic table, such as molybdenum, tungsten and the like, VIII group metal elements in the periodic table, such as cobalt, nickel and the like, and combinations thereof has been used.

VIB group metals in the periodic table (for example, tungsten and molybdenum) and oxides and sulfides thereof are known to be active in catalyzing various kinds of reactions such as hydrogenation, dehydrogenation, oxidation, deoxygenation, desulfurization, denitrogenation, isomerization, cracking and the like.

When VIII group metals in the periodic table (for example, iron, cobalt and nickel) are combined with VIB group metals and then used, catalytic activity is known to be improved. Such VIII group metals are often referred to as cocatalysts (promoters) of a catalyst.

It is known in the prior art that high-activity active sites are formed when such a cocatalyst is used. Particularly, in the case of a hydroprocessing catalyst, Co(or Ni)Mo(or W)S are known as high-activity active sites. In order to accelerate the formation of high-activity active sites, research into highly dispersing Mo(or W)$S_2$ particles or effectively supporting $MoS_2$ with Co(or Ni) has been actively carried out. Further, it is known in the thesis (Catalysis Today 45 (1998) 271-276, Catalysis Today 130 (2008) 75-79, Journal of Catalysis 229 (2005) 424-438) that chelating compounds [ethylene diaminetetraacetic acid (EDTA), nitrilotriacetic acid (NTA), *trans*-1,2-cyclohexanediamine-*N,N,N,N'*-tetraacetic acid (cyDTA)] or ethylene glycol are generally used in order to accelerate the formation of active sites.

As conventional technologies using a chelating agent, U.S. Patent No. 5,891,821 discloses a method of improving a hydrodesulfurization efficiency using a water-soluble amine, for example, ethylenediamine or monoethanolamine. Further, European Patent Application Publication EP1 043 069 A1 discloses a method of improving catalytic activity by providing an additive (a molecule including one or more nitrogen atoms and one or more carbonyl groups) to a catalyst including an alumina carrier supported with 26 wt% $MoO_3$, 4.7 wt% NiO and 6.7wt% $P_2O_5$. It was described in an Example of EP1 043 069 A1 that the hydrodesulfurization efficiency of a dry catalyst was improved when the catalyst was supported with EDTA.

Therefore, improved catalysts, particularly, effective catalysts having high activity, are still required to be developed in spite of various descriptions in Patents and Published Documents for hydroprocessing catalysts. Recently, such hydroprocessing catalysts have been widely applied to deoxygenation and denitrogenation reactions and the like as well as a conventional desulfurization reaction. Particularly, considering that these hydroprocessing catalysts are used to hydrogenate animal and plant oils as well as to treat hydrocarbon oils derived from petroleum or coal, it can be seen that the necessity of hydroprocessing catalysts having high activity is more increased.

### Disclosure

### Technical Problem

An object of the present invention is to provide a hydroprocessing catalyst, which has higher activity because it includes at least one hydrogenation metal component and an organic or organometallic compound having a carbonyl group or a derivative thereof.

Another object of the present invention is to provide a hydroprocessing catalyst, which has higher activity because it includes a carrier supported with at least one hydrogenation metal component and an organic or organometallic compound having a carbonyl group or a derivative thereof.

### Technical Solution

In an embodiment of the present invention, a hydroprocessing catalyst may include:

(i) one or more hydrogenation metal components selected from the group consisting of VIB, VIIB and VIII group metals; and (ii) an organic compound selected from methyl acetoacetate, ethyl acetoacetate and a mixture thereof, wherein the hydroprocessing catalyst is supported in a carrier.

In another embodiment of the present invention, a hydroprocessing catalyst may include: (i) one or more hydrogenation metal components selected from the group consisting of VIB, VIIB and VIII group metals; and (ii) an organometallic compound selected from a compound in which methyl acetoacetate or ethyl acetoacetate is bonded with a metal component such as cobalt, nickel, molybdenum or tungsten and a mixture of methyl acetoacetate or ethyl acetoacetate and cobalt, nickel, molybdenum or tungsten, wherein the hydroprocessing catalyst is supported in a carrier.

In still another embodiment of the present invention, a hydroprecessing catalyst may be prepared by supporting a carrier with (i) one or more hydrogenation metal components selected from the group consisting of VIB, VIIB and VIII group metals and (ii) the organic compound as defined above or the organometallic compound as defined above.

As the catalyst supporting method, methods generally known in the related art such as impregnation, precipitation, ion exchange and the like may be used without limitation.

In the present invention, the hydroprocessing catalyst may include a hydrorefining catalyst, a hydrotreating catalyst, a hydrocracking catalyst and the like, which are respectively used in a hydrorefining process, a hydrotreating process, a hydrocracking process and the like.

In an embodiment of the present invention, the carrier may be alumina, silica, silica-alumina, titanium oxide, a molecular sieve, zirconia, aluminum phosphate, carbon, niobia or a mixture thereof. Examples of the molecular sieve may include ZSM-5, ZSM-12, ZSM-21, ZSM-22, ZSM-23, ZSM-35, ZSM-38, ZSM-48, ZSM-57, SSZ-32, ferrite, SAPO-11, SAPO-31, SAPO-41, MAPO-11, MAPO-31, X-zeolite, Y-zeolite, L-zeolite, beta-zeolite, SBA-15, MCM-41, MCM-48 and the like.

The hydrogenation metal component may be at least one metal component selected from the group consisting of VIB, VIIB and VIII group metals. For example, the hydrogenation metal component may be at least one metal component selected from the group consisting of molybdenum (Mo), tungsten (W), cobalt (Co) and nickel (Ni).

In an embodiment of the present invention, the amount of the hydrogenation metal component may be suitably adjusted depending on the kind of a carrier and whether or not a catalyst is sulfurized. For example, the amount of the hydrogenation metal component may be 1 - 95 wt%, and preferably 2 - 90 wt%, based on the total amount of the hydroprocessing catalyst. When the amount of the hydrogenation metal component is less than 1 wt%, the processing catalyst cannot sufficiently exhibit hydroprocessing activity. The organic compound is methyl acetoacetate, ethyl acetoacetate or a mixture thereof. The organometallic compound may be a compound in which methyl acetoacetate, ethyl acetoacetate, methyl molonate or malic acid is bonded with a metal component such as cobalt, nickel, molybdenum or tungsten. Preferably, the organometallic compound may be a compound in which methyl acetoacetate or ethyl acetoacetate is bonded with a metal component such as cobalt, nickel, molybdenum or tungsten. More preferably, the organometallic compound may be a compound in which methyl acetoacetate or ethyl acetoacetate is bonded with a metal component such as cobalt or nickel. This organometallic compound may be prepared by reacting a metal salt with the organic compound or a basic component.

Further, the organometallic compound may be a mixture of methyl acetoacetate, ethyl acetoacetate, methyl molonate or malic acid and cobalt, nickel, molybdenum or tungsten. Preferably, the organometallic compound may be a mixture of methyl acetoacetate or ethyl acetoacetate and cobalt, nickel, molybdenum or tungsten. More preferably, the organometallic compound may be a mixture of methyl acetoacetate or ethyl acetoacetate and cobalt or nickel.

In an embodiment of the present invention, the amount of the organic compound or the organometallic compound may be 1 - 90 wt% based on the total amount of the hydroprocessing catalyst. Preferably, the amount of the organic compound or the organometallic compound may be 3 - 80 wt% based on the total amount of the hydroprocessing catalyst. When the amount of the organic compound or the organometallic compound is more than 90 wt%, the increase in activity of the hydroprocessing catalyst to the added organic compound or organometallic compound is slight, which is not economically preferable.

In an embodiment of the present invention, the hydroprocessing catalyst may further include phosphorus (P), fluorine (F), chlorine (Cl), bromine (Br), boron (B) or a mixture thereof in order to increase the reaction activity thereof by changing the structure of metal (active site) or the properties of a carrier. The amount thereof may be 30 wt% or less, and preferably 1 - 10 wt%, based on the total amount of the processing catalyst.

In an embodiment of the present invention, the hydroprocessing catalyst may be used in a process of selectively removing one or more of sulfur, oxygen and nitrogen by a hydrotreatment reaction.

In an embodiment of the present invention, a method of supporting a carrier with (i) one or more hydrogenation metal components selected from the group consisting of VIB, VIIB and VIII group metals and (ii) the organic compound as defined above or the organometallic compound as defined above may be performed by a general supporting method. This method may be performed separately or simultaneously.

In still another embodiment of the present invention, when the carrier supporting method is separately performed, a method of preparing a hydroprocessing catalyst may further include the steps of: (a) supporting a carrier with at least one hydrogenation metal component selected from the group consisting of VIB, VIIB and VIII group metals and then drying, calcining or drying and then calcining the carrier; and (b) supporting the carrier obtained in step (a) with the organic compound or the organometallic compound and then drying, calcining or drying and then calcining the carrier

In step (a) or (b), the drying of the carrier may be performed at 70°C - 350°C, and preferably at 100°C - 350°C. Further, the calcining of the carrier may be performed at 351°C - 700°C, and preferably at 351°C - 600°C.

In an embodiment of the present invention, in step (b) a base may be further added in addition to the organic compound or the organometallic compound. For example, the base may be selected from among ammonia, amines, anilines, pyridines, hydroxides, carbonates and mixtures thereof.

In an embodiment of the present invention, the hydroprocessing catalyst may further include phosphorus, fluorine, chlorine, bromine, boron or a mixture thereof. In another embodiment of the present invention, a carrier may be supported with phosphorus, fluorine, chlorine, bromine, boron or a mixture thereof. Specifically, the method of preparing a hydroprocessing catalyst may further include the step of supporting a carrier with phosphorus, fluorine, chlorine, bromine, boron or a mixture thereof and then drying, calcining or drying and then calcining the carrier, before step (a).

In still another embodiment of the present invention, when the carrier supporting method is simultaneously performed, a method of preparing a hydroprocessing catalyst may further include the steps of: (A) supporting a carrier with at least one hydrogenation metal component selected from the group consisting of VIB, VIIB and VIII group metals and the organic compound as defined above or the organometallic compound as defined above; and (B) drying, calcining or drying and then calcining the carrier obtained in step (A).

In an embodiment of the present invention, in step (A), the hydroprocessing catalyst may further include phosphorus, fluorine, chlorine, bromine, boron or a mixture thereof. In another embodiment of the present invention, a carrier may be supported with phosphorus, fluorine, chlorine, bromine, boron or a mixture thereof. Specifically, the method of preparing a hydroprocessing catalyst may further include the step of supporting a carrier with phosphorus, fluorine, chlorine, bromine, boron or a mixture thereof and then drying, calcining or drying and then calcining the carrier, before step (A).

Further, another method of preparing a catalyst supported with the organometallic compound may include a method of preparing a catalyst directly using the organometallic compound.

As described above, since a catalyst supported with the organic compound or the organometallic compound can be prepared by various methods, the method of the present invention is not limited to the above-mentioned methods.

In still another embodiment of the present invention, the hydroprocessing catalyst can be converted into metal sulfide and then used, and the hydroprocessing catalyst, prepared by a general treatment method, can be sulfurized. For example, the metal supported in the catalyst can be converted into metal sulfide by treating the catalyst at a high temperature of 120 - 450°C in the presence of hydrogen using only an organic sulfur compound or $H_2S$ or using a mixed solution of a sulfur compound and a solvent. The sulfidation of the catalyst may be performed by a general method commonly known in the related art, and is not limited to the above-mentioned method.

## Advantageous Effects

The hydroprocessing catalyst of the present invention, which includes an organic compound as defined above or an organometallic compound as defined above, has higher activity than that of a conventional hydroprocessing catalyst.

Further, the hydroprocessing catalyst of the present invention is effective at hydrogenating (deoxygenating) animal and plant oils containing fatty acid or triglyceride as a main ingredient as well as hydrogenating hydrocarbon oil derived from petroleum or coal.

Moreover, the hydroprocessing catalyst of the present invention exhibits high activity in the hydrogenation reaction of hydrocarbon fractions derived from various processes, and exhibits remarkable effects in the desulfurization, denitrogenation and/or deoxygenation reactions of hydrocarbon containing one or more of sulfur, nitrogen and oxygen.

## Mode for Invention

Hereinafter, the present invention will be described in more detail with reference to the following Examples. However, the scope of the present invention is not limited to these Examples.

Example 1: Preparation of a CoMo/$Al_2O_3$ catalyst

A CoMo/$Al_2O_3$ catalyst was prepared as follows.

First, ammonium heptamolybdate tetrahydrate (AHM) was dissolved in distilled water to obtain an aqueous solution. An $Al_2O_3$ carrier having a diameter of 1 mm was impregnated with the aqueous solution, dried at 150°C for 2 hours, and then continuously calcined at 500°C for 2 hours to prepare a $MoO_3$/$Al_2O_3$ catalyst.

Cobalt nitrate hexahydrate (CNH) was dissolved in distilled water to obtain an aqueous solution. Then, the $MoO_3$/$Al_2O_3$ catalyst was impregnated with the aqueous solution, and then dried at 150°C for 2 hours to prepare a catalyst including about 15 wt% of molybdenum and about 4 wt% of cobalt using an $Al_2O_3$ carrier having a diameter of 1 mm. Thereafter, methyl acetoacetate (MeAA) was mixed with distilled water in an amount of 15 wt% based on the weight of a dry catalyst to obtain a mixed solution, the mixed solution was added to the catalyst, and then this catalyst was dried at 150°C for 2 hours to prepare a CoMo/Al$_2$O$_3$ catalyst. In the preparation of the CoMo/Al$_2$O$_3$ catalyst, ammonium heptamolybdate tetrahydrate (AHM) was used as a molybdenum (Mo) precursor, but various types of molybdenum (Mo) precursors may be used instead of AHM. Further, cobalt nitrate hexahydrate (CNH) was used as a cobalt (Co) precursor, but various types of cobalt (Co) precursors may be used instead of CNH.

Example 2: Preparation of a CoMo/Al$_2$O$_3$ catalyst

A CoMo/Al$_2$O$_3$ catalyst was prepared by calcining the catalyst prepared in Example 1 at 500°C for 2 hours.

Example 3: Preparation of a CoMo/Al$_2$O$_3$ catalyst

AHM and CNH were dissolved in distilled water to obtain an aqueous solution. Then, an Al$_2$O$_3$ carrier was impregnated with the aqueous solution, and then dried at 150°C for 2 hours to prepare a catalyst. Thereafter, methyl acetoacetate (MeAA) was mixed with distilled water in an amount of 15 wt% based on the weight of a dry catalyst to obtain an aqueous MeAA solution, the aqueous MeAA solution was added to the catalyst, and then this catalyst was dried at 150°C for 2 hours to prepare a CoMo/Al$_2$O$_3$ catalyst.

Example 4: Preparation of a CoMo/Al$_2$O$_3$ catalyst

A CoMo/Al$_2$O$_3$ catalyst was prepared in the same manner as in Example 1, except that a mixed solution in which acetylacetone is mixed with ethanol in an amount of 13 wt% based on the weight of a dry catalyst was added instead of the aqueous MeAA solution.

Example 5: Preparation of a CoMo/Al$_2$O$_3$ catalyst

A CoMo/Al$_2$O$_3$ catalyst was prepared in the same manner as in Example 1, except that a mixed solution in which ethyl acetoacetate is mixed with ethanol in an amount of 18 wt% based on the weight of a dry catalyst was added instead of the aqueous MeAA solution.

Example 6: Preparation of a CoMo/Al$_2$O$_3$ catalyst

A CoMo/Al$_2$O$_3$ catalyst was prepared in the same manner as in Example 1, except that a mixed solution in which dimethyl malonate is mixed with ethanol in an amount of 18 wt% based on the weight of a dry catalyst was added instead of the aqueous MeAA solution.

Example 7: Preparation of a CoMo/Al$_2$O$_3$ catalyst

A CoMo/Al$_2$O$_3$ catalyst was prepared in the same manner as in Example 1, except that a mixture of ammonia water and the aqueous MeAA solution was added.

Example 8: Preparation of a CoMo/Al$_2$O$_3$ catalyst

AHM, CNH and MeAA were dissolved in distilled water in the same amounts as in Example 1 to obtain an aqueous solution. Subsequently, an Al$_2$O$_3$ carrier was impregnated with the aqueous solution, and then dried at 150°C for 2 hours to prepare a CoMo/Al$_2$O$_3$ catalyst.

Example 9: Preparation of a CoMo/Al$_2$O$_3$ catalyst

A mixed solution in which cobalt methyl acetoacetate (II) is mixed with methanol in an amount of 18 wt% (based on cobalt) based on the weight of a dry catalyst was added to the MoO$_3$/Al$_2$O$_3$ prepared in Example 1, and then dried at 150°C for 2 hours to prepare a CoMo/Al$_2$O$_3$ catalyst.

Comparative Example 1: Preparation of a CoMo/Al$_2$O$_3$ catalyst

A CoMo/Al$_2$O$_3$ catalyst including about 15 wt% of molybdenum and about 4 wt% of cobalt was prepared using an alumina carrier having a diameter of 1 mm as follows. First, AHM was dissolved in distilled water to obtain an aqueous solution. An Al$_2$O$_3$ carrier was impregnated with the aqueous solution, dried at 150°C for 2 hours, and then continuously calcined at 500°C for 2 hours to prepare a $MoO_3/Al_2O_3$ catalyst.

CNH was dissolved in distilled water to obtain an aqueous solution. Then, the $MoO_3/Al_2O_3$ catalyst was impregnated with the aqueous solution, dried at 150°C for 2 hours, and then continuously calcined at 500 °C for 2 hours to prepare a $MoO_3/Al_2O_3$ catalyst.

Comparative Example 2: Preparation of a $CoMo/Al_2O_3$ catalyst

A $CoMo/Al_2O_3$ catalyst was prepared in the same manner as in Example 1, except that a mixed solution in which EDTA is mixed with ammonia water and distilled water in an amount of 30 wt% based on the weight of a dry catalyst was added instead of the aqueous MeAA solution.

Test Example 1

Each of the catalysts prepared in the above methods was sulfided by the following sulfidation method, and was then hydrotreated. The results thereof are shown in Table 1 below.

- Sulfidation of catalyst -

5 g of each of the prepared catalysts (Examples 1 to 7 and Comparative Examples 1 and 2), 77 g of pentadecane and 30 g of dimethyl disulfide were introduced into an autoclave, pressurized by 40 bars of $H_2$ at room temperature, and then heated to 350°C to sulfurize the catalyst for 3 hours.

- Hydroprocessing reaction -

0.1 g of the sulfurized catalyst (particle size: 80 - 140 mesh), 46 g of pentadecane and 0.06 g of dibenzothiophene (DBT) were introduced into a 100 cc autoclave, and then reacted at 320°C for 1 hour. Subsequently, the DBT remaining after the reaction was analyzed by GC. Then, a hydroprocessing reaction was carried out, and the hydroprocessing activities of the catalysts were compared.

$$\text{Hydroprocessing activity } (\%) = \frac{\text{DBT content in solution before reaction - DBT content in solution after reaction}}{\text{DBT content in solution before reaction}} \times 100$$

[Table 1]

| Catalyst | Hydroprocessing activity |
|---|---|
| Example 1 | 61 |
| Example 2 | 50 |
| Example 3 | 59 |
| Example 4 | 57 |
| Example 5 | 58 |
| Example 6 | 55 |
| Example 7 | 58 |
| Example 8 | 57 |
| Example 9 | 60 |
| Comparative Example 1 | 37 |
| Comparative Example 2 | 45 |

From the results shown in Table 1 above, it can be ascertained that the hydroprocessing activities of the catalysts of Examples 1 to 9, to which an organic compound containing a carbonyl group or a derivative thereof was added, were high, the hydroprocessing activity of the catalyst of Comparative Example 1, which did not include the organic compound, was low, and the hydroprocessing activity of the catalyst of Comparative Example 2, to which EDTA was added instead of the organic compound, was also low. Consequently, it can be ascertained that catalysts having higher activity can be obtained by the addition of the organic compound containing a carbonyl group or a derivative thereof.

Example 10: Preparation of a CoMo/ZrO$_2$ catalyst

A CoMo/ZrO$_2$ catalyst was prepared in the same manner as in Example 1, except that a ZrO$_2$ carrier was used instead of an Al$_2$O$_3$ carrier.

Comparative Example 3: Preparation of a CoMo/ZrO$_2$ catalyst

A CoMo/ZrO$_2$ catalyst was prepared in the same manner as in Comparative Example 1, except that a ZrO$_2$ carrier was used instead of an Al$_2$O$_3$ carrier.

Test Example 2

Each of the catalysts of Example 10 and Comparative Example 3 was sulfurized sulfide by the method of Test Example 1, and then the hydroprocessing reaction of oxygen-containing hydrocarbon was carried out. The results thereof are shown in Table 2 below.

- Hydroprocessing reaction -

0.1 g of the sulfurized catalyst (particle size: 80 - 140 mesh), 46 g of pentadecane and 0.06 g of dibenzofuran (DBF) were introduced into a 100 cc autoclave, and then reacted at 320°C for 1 hour. Subsequently, the DBF remaining after the reaction was analyzed by GC. Then, a hydroprocessing reaction was carried out, and the hydroprocessing activities of the catalysts were compared.

$$\text{Hydroprocessing activity (\%)} = \frac{\text{DBF content in solution before reaction} - \text{DBF content in solution after reaction}}{\text{DBF content in solution before reaction}} \times 100$$

[Table 2]

| Catalyst | Hydroprocessing activity |
|---|---|
| Example 10 | 45 |
| Comparative Example 3 | 31 |

From the results shown in Table 2 above, it can be ascertained that the catalyst, to which an organic compound containing a carbonyl group or a derivative thereof was added, exhibited high hydroprocessing activity in the deoxygenation reaction as well as in the desulfurization reaction of Table 1.

Example 11: Preparation of a NiMo/Al$_2$O$_3$ catalyst

A NiMo/Al$_2$O$_3$ catalyst was prepared in the same manner as in Example 1, except that nickel nitrate hexahydrate (NNH) was used instead of CNH. Here, NNH was used as a nickel (Ni) precursor, but various types of nickel (Ni) precursors may be used instead of NNH.

Example 12: Preparation of a NiMoP/Al$_2$O$_3$ catalyst

An alumina carrier was supported with an aqueous H$_3$PO$_4$ solution, calcined at 500°C for 2 hours, and then treated in the same manner in Example 11 to prepare a NiMoP/Al$_2$O$_3$ catalyst including about 15 wt% of molybdenum (Mo), about 4 wt% of nickel (Ni) and about 3 wt% of phosphorus (P). Here, H$_3$PO$_4$ was used as a phosphorus (P) precursor, but various types of phosphorus (P) precursors may be used instead of H$_3$PO$_4$.

Example 13: Preparation of a NiW/Al$_2$O$_3$ catalyst

A NiW/Al$_2$O$_3$ catalyst was prepared in the same manner as in Example 11, except that ammonium metatungstate hydrate (AMT) was used instead of AHM. Here, AMT was used as a tungsten (W) precursor, but various types of tungsten (W) precursors may be used instead of AMT.

Comparative Example 4: Preparation of a NiMo/Al$_2$O$_3$ catalyst

A NiMo/Al$_2$O$_3$ catalyst was prepared in the same manner as in Comparative Example 1, except that NNH was used instead of CNH.

Comparative Example 5: Preparation of a NiW/Al$_2$O$_3$ catalyst

A NiW/Al$_2$O$_3$ catalyst was prepared in the same manner as in Comparative Example 1, except that NNH was used instead of CNH, and AMT was used instead of AHM.

Test Example 3

Each of the catalysts prepared in the above methods was sulfurized by the following sulfidation method, and was then hydrotreated. The results thereof are shown in Table 3 below.

- Sulfidation of catalyst -

5 g of each of the prepared catalysts (Examples 11 to 13 and Comparative Examples 4 and 5) was charged in a 6 cc cylindrical reactor, heated to 320°C while introducing R-LGO containing 3 wt% of dimethyl sulfide (DMDS) into the reactor at flow rate of 0.1 cc/min under the conditions of room temperature, a reaction pressure of 45 bar and a H$_2$ flow rate of 16 cc/min, and then pretreated at 320 °C for 3 hours.

- Hydroprocessing reaction -

A hydroprocessing reaction was carried out while introducing light cycle oil (boiling point range: 170 - 360 °C, sulfur content: 0.3 wt%, nitrogen content: 0.03 wt%) at a flow rate of 0.12 cc/min under the conditions of a temperature of 300 °C, a pressure of 60 bar and a H$_2$ flow rate of 60 cc/min, and the results thereof are shown in Table 3 below. Hydroprocessing activity is expressed by a sulfur compound removal rate and a nitrogen compound removal rate.

$$\text{Sulfur removal rate } (\%) = \frac{\text{S content in solution before reaction } - \text{ S content in solution after reaction}}{\text{S content in solution before reaction}} \times 100$$

$$\text{Nitrogen removal rate } (\%) = \frac{\text{N content in solution before reaction } - \text{ N content in solution after reaction}}{\text{N content in solution before reaction}} \times 100$$

[Table 3]

|  | Sulfur removal rate (%) | Nitrogen removal rate (%) |
|---|---|---|
| Example 11 | 93 | 96 |
| Example 12 | 95 | 97 |
| Example 13 | 92 | 96 |
| Comparative Example 4 | 86 | 91 |
| Comparative Example 5 | 85 | 92 |

From the results shown in Table 3 above, it can be ascertained that the hydroprocessing activities (each of which is expressed by a sulfur compound removal rate and a nitrogen compound removal rate) of the catalysts of Examples 11 to 13, to each of which an organic compound containing a carbonyl group or a derivative thereof was added, were high, and the hydroprocessing activities of the catalysts of Comparative Examples 4 and 5, each of which did not include the organic compound, was low. Consequently, it can be ascertained that catalysts having higher activity can be obtained by the addition of the organic compound.

Example 14: Preparation of a NiMo/TiO$_2$ catalyst

A NiMo/TiO$_2$ catalyst was prepared in the same manner as in Example 11, except that a TiO$_2$ carrier was used instead of an Al$_2$O$_3$ carrier.

Comparative Example 5: Preparation of a NiMo/TiO$_2$ catalyst

A NiMo/TiO$_2$ catalyst was prepared in the same manner as in Comparative Example 4, except that a TiO$_2$ carrier was used instead of an Al$_2$O$_3$ carrier.

Test Example 4

Each of the catalysts of Example 14 and Comparative Example 5 was sulfurized by the method of Test Example 3, and then a hydroprocessing reaction was carried out. The results thereof are shown in Table 4 below.

- Hydroprocessing reaction -

5 g of the catalyst sulfurized by the method of Test Example 3 was hydrotreated under the conditions of a reaction temperature of 320 °C, a reaction pressure of 30 bar and a hydrogen flow rate of 100 cc/min. Soybean oil was used as a feed. Soybean oil was reacted at a reaction rate of 0.1 cc/min (LHSV = 1), and the results thereof are shown in Table 4 below. Soybean is converted into a diesel fraction having a boiling point of 221 - 343°C by a hydrodeoxygenation or decarboxylation reaction on a catalyst. Hydroprocessing activity is represented by the conversion ratio of soybean oil into diesel included in a reaction product.

$$\text{Hydroprocessing activity } (\%) = \frac{\text{Weight of product having boiling point of } 221 - 343^{\circ}\text{C (wt \%)}}{\text{Total weight of products (wt\%)}} \times 100$$

[Table 4]

| Catalyst | Hydroprocessing activity (%) |
|---|---|
| Example 14 | 95 |
| Comparative Example 5 | 89 |

From the results shown in Table 4 above, it can be ascertained that the catalyst exhibited high hydroprocessing activity in the hydroprocessing (deoxygenation) of animal and plant oils containing fatty acid or triglyceride as a main ingredient as well as in the hydroprocessing of sulfur, nitrogen and oxygen components included in hydrocarbons derived from petroleum or coal.

**Claims**

1.    A hydroprocessing catalyst, comprising:

    (i) one or more hydrogenation metal components selected from the group consisting of VIB, VIIB and VIII group metals; and
    (ii) an organic compound or an organometallic compound,
    (iii) a carrier supported with (i) the one or more hydrogenation metal component and (ii) the organic compound or the organometallic compound,

wherein the organic compound is selected from the group consisting of methyl acetoacetate, ethyl acetoacetate and a mixture thereof, and
wherein the organometallic compound is a compound in which methyl acetoacetate or ethyl acetoacetate is bonded with a metal component such as cobalt, nickel, molybdenum or tungsten, or is a mixture of methyl acetoacetate or ethyl acetoacetate, and cobalt, nickel, molybdenum or tungsten.

2. The hydroprocessing catalyst of claim 1, wherein the hydrogenation metal component is at least one metal selected from the group consisting of molybdenum (Mo), tungsten (W), cobalt (Co) and nickel (Ni).

3. The hydroprocessing catalyst of claim 1, wherein an amount of the organic compound is 1 - 90 wt% based on a total amount of the hydroprocessing catalyst.

4. The hydroprocessing catalyst of claim 1, wherein the metal component in the organometallic compound is selected from the group consisting of cobalt, nickel, molybdenum or tungsten.

5. The hydroprocessing catalyst of claim 1, wherein the metal component in the organometallic compound is selected from the group consisting of cobalt or nickel.

6. The hydroprocessing catalyst of claim 1, wherein the carrier is alumina, silica, silica-alumina, titanium oxide, a molecular sieve, zirconia, aluminum phosphate, carbon, niobia or a mixture thereof.

7. The hydroprocessing catalyst of claim 1, further comprising phosphorus, fluorine, chlorine, bromine, boron or a mixture thereof.

8. A method for hydroprocessing hydrocarbon oil derived from petroleum or coal, comprising:
hydrogenating the hydrocarbon oil in the presence of the catalyst of any one of claims 1-7 to selectively remove one or more of sulfur, oxygen and nitrogen in the hydrocarbon oil.

9. A method of preparing a hydroprocessing catalyst, comprising the steps of:

(a) supporting a carrier with at least one hydrogenation metal component selected from the group consisting of VIB, VIIB and VIII group metals and then drying, calcining or drying and then calcining the carrier; and
(b) supporting the carrier obtained in step (a) with an organic compound or an organometallic compound,

and then drying, calcining or drying and then calcining the carrier, wherein the organic compound is selected from the group consisting of methyl acetoacetate, ethyl acetoacetate and a mixture thereof, and
wherein the organometallic compound is a compound in which methyl acetoacetate or ethyl acetoacetate is bonded with a metal component such as cobalt, nickel, molybdenum or tungsten, or is a mixture of methyl acetoacetate or ethyl acetoacetate, and cobalt, nickel, molybdenum or tungsten.

10. The method of claim 9, further comprising the step of supporting a carrier with phosphorus, fluorine, chlorine, bromine, boron or a mixture thereof and then drying, calcining or drying and then calcining the carrier, before the step (a).

11. The method of claim 9, wherein, in the step (b), a base is further added in addition to the organic compound or the organometallic compound.

12. A method of preparing a hydroprocessing catalyst, comprising the steps of:

(A) supporting a carrier with at least one hydrogenation metal component selected from the group consisting of VIB, VIIB and VIII group metals and an organic compound or an organometallic compound; and
(B) drying, calcining or drying and then calcining the carrier obtained in step (A), wherein the organic compound is selected from the group consisting of methyl acetoacetate, ethyl acetoacetate and a mixture thereof, and

wherein the organometallic compound is a compound in which methyl acetoacetate or ethyl acetoacetate is bonded with a metal component such as cobalt, nickel, molybdenum or tungsten, or is a mixture of methyl acetoacetate or ethyl acetoacetate, and cobalt, nickel, molybdenum or tungsten.

**13.** The method of any one of claims 9 to 12, further comprising:

treating the hydroprocessing catalyst at a temperature of 120 to 450°C in the presence of hydrogen using only an organic sulfur compound or $H_2S$, or using a mixed solution of a sulfur compound and a solvent to perform sulfidation of the hydroprocessing catalyst, thereby converting the metal supported in the catalyst to metal sulfide

**14.** The method of any one of claims 9 to 13, the metal component in the organometallic compound is selected from the group consisting of cobalt, nickel, molybdenum and tungsten.

**15.** A method for hydroprocessing animal or plant oils containing fatty acid or triglyceride as a main ingredient, comprising: deoxygenating the animal or plant oils in the presence of the catalyst of any one of claims 1-7.

**Patentansprüche**

**1.** Wasserstoffbehandlungskatalysator, umfassend:

(i) eine oder mehrere Hydriermetallkomponenten ausgewählt aus der Gruppe bestehend aus Metallen der Gruppe VIB, VIIB und VIII; und
(ii) eine organische Verbindung oder eine organometallische Verbindung,
(iii) einen Träger, auf dem (i) die eine oder mehrere Hydriermetallkomponente(n) und (ii) die organische Verbindung oder die organometallische Verbindung fixiert sind,

wobei die organische Verbindung ausgewählt ist aus der Gruppe bestehend aus Methylacetoacetat, Ethylacetoacetat und einer Mischung davon, und
wobei die organometallische Verbindung eine Verbindung ist, in der Methylacetoacetat oder Ethylacetoacetat mit einer Metallkomponente verbunden ist, wie Kobalt, Nickel, Molybdän oder Wolfram, oder die eine Mischung von Methylacetoacetat oder Ethylacetoacetat und Kobalt, Nickel, Molybdän oder Wolfram ist.

**2.** Wasserstoffbehandlungskatalysator nach Anspruch 1, wobei die Hydriermetallkomponente mindestens ein Metall ausgewählt aus der Gruppe bestehend aus Molybdän (Mo), Wolfram (W), Kobalt (Co) und Nickel (Ni) ist.

**3.** Wasserstoffbehandlungskatalysator nach Anspruch 1, wobei die Menge der organischen Verbindung 1 bis 90 Gew.% beträgt, bezogen auf eine Gesamtmenge des Wasserstoffbehandlungskatalysators.

**4.** Wasserstoffbehandlungskatalysator nach Anspruch 1, wobei die Metallkomponente in der organometallischen Verbindung ausgewählt ist aus der Gruppe bestehend aus Kobalt, Nickel, Molybdän oder Wolfram.

**5.** Wasserstoffbehandlungskatalysator nach Anspruch 1, wobei die Metallkomponente in der organometallischen Verbindung ausgewählt ist aus der Gruppe bestehend aus Kobalt oder Nickel.

**6.** Wasserstoffbehandlungskatalysator nach Anspruch 1, wobei der Träger Aluminiumoxid, Siliciumdioxid, Siliciumdioxid-Aluminiumoxid, Titanoxid, ein Molekularsieb, Zirconiumdioxid, Aluminiumphosphat, Kohlenstoff, Diniobpentoxid oder eine Mischung davon ist.

**7.** Wasserstoffbehandlungskatalysator nach Anspruch 1, der ferner Phosphor, Fluor, Chlor, Brom, Bor oder eine Mischung davon umfasst.

**8.** Verfahren zur Wasserstoffbehandlung von Kohlenwasserstofföl, das von Erdöl oder Kohle abgeleitet ist, umfassend: Hydrieren des Kohlenwasserstofföls in Gegenwart des Katalysators gemäß einem der Ansprüche 1 bis 7, um selektiv einen oder mehrere von Schwefel, Sauerstoff und Stickstoff in dem Kohlenwasserstofföl zu entfernen.

**9.** Verfahren zum Herstellen eines Wasserstoffbehandlungskatalysators, umfassend die Schritte:

(a) Fixieren von mindestens einer Hydriermetallkomponente ausgewählt aus der Gruppe bestehend aus Metallen der Gruppe VIB, VIIB und VIII auf einen Träger, und danach Trocknen, Calcinieren, oder Trocknen und dann Calcinieren des Trägers; und
(b) Fixieren von einer organischen Verbindung oder einer organometallischen Verbindung auf dem in Schritt (a) erhaltenen Träger,

und danach Trocknen, Calcinieren, oder Trocknen und dann Calcinieren des Trägers, wobei die organische Verbindung ausgewählt ist aus der Gruppe bestehend aus Methylacetoacetat, Ethylacetoacetat und einer Mischung davon, und wobei die organometallische Verbindung eine Verbindung ist, in der Methylacetoacetat oder Ethylacetoacetat mit einer Metallkomponente verbunden ist, wie Kobalt, Nickel, Molybdän oder Wolfram, oder die eine Mischung von Methylacetoacetat oder Ethylacetoacetat und Kobalt, Nickel, Molybdän oder Wolfram ist.

10. Verfahren nach Anspruch 9, ferner umfassend den Schritt des Fixierens von Phosphor, Fluor, Chlor, Brom, Bor oder einer Mischung davon auf einem Träger und danach Trocknen, Calcinieren, oder Trocknen und dann Calcinieren des Trägers vor dem Schritt (a).

11. Verfahren nach Anspruch 9, wobei in dem Schritt (b) des Weiteren zusätzlich zu der organischen Verbindung oder der organometallischen Verbindung eine Base zugefügt wird.

12. Verfahren zum Herstellen eines Wasserstoffbehandlungskatalysators, umfassend die Schritte:

(A) Fixieren von mindestens einer Hydriermetallkomponente ausgewählt aus der Gruppe bestehend aus Metallen der Gruppe VIB, VIIB und VIII und einer organischen Verbindung oder einer organometallischen Verbindung auf einem Träger; und
(B) Trocknen, Calcinieren, oder Trocknen und dann Calcinieren des in Schritt (A) erhaltenen Trägers, wobei die organische Verbindung ausgewählt ist aus der Gruppe bestehend aus Methylacetoacetat, Ethylacetoacetat und einer Mischung davon, und

wobei die organometallische Verbindung eine Verbindung ist, in der Methylacetoacetat oder Ethylacetoacetat mit einer Metallkomponente verbunden ist, wie Kobalt, Nickel, Molybdän oder Wolfram, oder die eine Mischung von Methylacetoacetat oder Ethylacetoacetat und Kobalt, Nickel, Molybdän oder Wolfram ist.

13. Verfahren nach einem der Ansprüche 9 bis 12, das ferner umfasst:
Behandeln des Wasserstoffbehandlungskatalysators bei einer Temperatur von 120 bis 450 °C in Gegenwart von Wasserstoff unter Verwendung nur einer organischen Schwefelverbindung oder $H_2S$, oder Verwendung einer gemischten Lösung einer Schwefelverbindung und eines Lösungsmittels, um Sulfidierung des Wasserstoffbehandlungskatalysators durchzuführen, wodurch das in dem Katalysator fixierte Metall in Metallsulfid umgewandelt wird.

14. Verfahren nach einem der Ansprüche 9 bis 13, wobei die Metallkomponente in der organometallischen Verbindung ausgewählt ist aus der Gruppe bestehend aus Kobalt, Nickel, Molybdän und Wolfram.

15. Verfahren zur Wasserstoffverarbeitung von tierischen oder pflanzlichen Ölen, die Fettsäure oder Triglycerid als Hauptbestandteil enthalten, umfassend:
Entziehen von Sauerstoff aus den tierischen oder pflanzlichen Ölen in Gegenwart des Katalysators gemäß einem der Ansprüche 1 bis 7.

**Revendications**

1. Catalyseur d'hydrotraitement, comprenant :

(i) un ou plusieurs composants métalliques d'hydrogénation choisis dans le groupe constitué de métaux des groupes VIB, VIIB et VIII ; et
(ii) un composé organique ou un composé organométallique,
(iii) un support sur lequel sont immobilisés (i) les un ou plusieurs composants métalliques d'hydrogénation et (ii) le composé organique ou le composé organométallique,

dans lequel le composé organique est choisi dans le groupe constitué de l'acétoacétate de méthyle, l'acétoacétate d'éthyle et un mélange de ceux-ci, et dans lequel le composé organométallique est un composé dans lequel l'acétoacétate de méthyle ou l'acétoacétate d'éthyle est lié à un composant métallique tel que le cobalt, le nickel, le molybdène ou le tungstène, ou est un mélange d'acétoacétate de méthyle ou d'acétoacétate d'éthyle, et de cobalt, de nickel, de molybdène ou de tungstène.

**2.** Catalyseur d'hydrotraitement selon la revendication 1, dans lequel le composant métallique d'hydrogénation est au moins un métal choisi dans le groupe constitué du molybdène (Mo), du tungstène (W), du cobalt (Co) et du nickel (Ni).

**3.** Catalyseur d'hydrotraitement selon la revendication 1, dans lequel une quantité du composé organique est de 1 à 90 % en poids sur la base d'une quantité totale du catalyseur d'hydrotraitement.

**4.** Catalyseur d'hydrotraitement selon la revendication 1, dans lequel le composant métallique dans le composé organométallique est choisi dans le groupe constitué du cobalt, du nickel, du molybdène ou du tungstène.

**5.** Catalyseur d'hydrotraitement selon la revendication 1, dans lequel le composant métallique dans le composé organométallique est choisi dans le groupe constitué du cobalt ou du nickel.

**6.** Catalyseur d'hydrotraitement selon la revendication 1, dans lequel le support est l'alumine, la silice, silice-alumine, l'oxyde de titane, un tamis moléculaire, la zircone, le phosphate d'aluminium, le carbone, l'oxyde de niobium ou un mélange de ceux-ci.

**7.** Catalyseur d'hydrotraitement selon la revendication 1, comprenant en outre du phosphore, du fluor, du chlore, du brome, du bore ou un mélange de ceux-ci.

**8.** Procédé d'hydrotraitement d'huile d'hydrocarbures dérivée de pétrole ou de charbon, comprenant :
l'hydrogénation de l'huile d'hydrocarbures en présence du catalyseur selon l'une quelconque des revendications 1 à 7 pour éliminer sélectivement l'un ou plusieurs parmi le soufre, l'oxygène et l'azote dans l'huile d'hydrocarbures.

**9.** Procédé de préparation d'un catalyseur d'hydrotraitement, comprenant les étapes de :

(a) immobilisation sur un support d'au moins un composant métallique d'hydrogénation choisi dans le groupe constitué de métaux des groupes VIB, VIIB et VIII et ensuite séchage, calcination ou séchage puis calcination du support ; et
(b) immobilisation sur le support obtenu dans l'étape (a) d'un composé organique ou d'un composé organométallique,

et ensuite séchage, calcination ou séchage puis calcination du support,
dans lequel le composé organique est choisi dans le groupe constitué de l'acétoacétate de méthyle, l'acétoacétate d'éthyle et un mélange de ceux-ci, et dans lequel le composé organométallique est un composé dans lequel l'acétoacétate de méthyle ou l'acétoacétate d'éthyle est lié à un composant métallique tel que le cobalt, le nickel, le molybdène ou le tungstène, ou est un mélange d'acétoacétate de méthyle ou d'acétoacétate d'éthyle, et de cobalt, de nickel, de molybdène ou de tungstène.

**10.** Procédé selon la revendication 9, comprenant en outre l'étape d'immobilisation sur un support de phosphore, fluor, chlore, brome, bore ou un mélange de ceux-ci et ensuite séchage, calcination ou séchage puis calcination du support, avant l'étape (a).

**11.** Procédé selon la revendication 9, dans lequel, dans l'étape (b), une base est ensuite ajoutée en plus du composé organique ou du composé organométallique.

**12.** Procédé de préparation d'un catalyseur d'hydrotraitement, comprenant les étapes de :

(A) immobilisation sur un support d'au moins un composant métallique d'hydrogénation choisi dans le groupe constitué de métaux des groupes VIB, VIIB et VIII et d'un composé organique ou d'un composé organométallique ; et
(B) séchage, calcination ou séchage puis calcination du support obtenu dans l'étape (A), dans lequel le composé organique est choisi dans le groupe constitué de l'acétoacétate de méthyle, l'acétoacétate d'éthyle et un mélange de ceux-ci, et dans lequel le composé organométallique est un composé dans lequel l'acétoacétate de méthyle ou l'acétoacétate d'éthyle est lié à un composant métallique tel que le cobalt, le nickel, le molybdène ou le tungstène, ou est un mélange d'acétoacétate de méthyle ou d'acétoacétate d'éthyle, et de cobalt, de nickel, de molybdène ou de tungstène.

**13.** Procédé selon l'une quelconque des revendications 9 à 12, comprenant en outre :

le traitement du catalyseur d'hydrotraitement à une température de 120 à 450 °C en présence d'hydrogène en utilisant uniquement un composé soufré organique ou $H_2S$, ou en utilisant une solution mixte d'un composé soufré et d'un solvant pour effectuer une sulfuration du catalyseur d'hydrotraitement, de façon à convertir le métal immobilisé dans le catalyseur en sulfure métallique.

14. Procédé selon l'une quelconque des revendications 9 à 13, le composant métallique dans le composé organométallique est choisi dans le groupe constitué du cobalt, du nickel, du molybdène et du tungstène.

15. Procédé d'hydrotraitement d'huiles animales ou végétales contenant un acide gras ou un triglycéride en tant que composant principal, comprenant :
la désoxygénation des huiles animales ou végétales en présence du catalyseur selon l'une quelconque des revendications 1 à 7.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5891821 A
- EP 1043069 A1

**Non-patent literature cited in the description**

- *Catalysis Today,* 1998, vol. 45, 271-276
- *Catalysis Today,* 2008, vol. 130, 75-79
- *Journal of Catalysis,* 2005, vol. 229, 424-438